# FASCICULE DE BREVET EUROPEEN

(11) **EP 1 228 320 B1**
(45) Date de publication et mention de la délivrance du brevet: **07.03.2007**
(21) Numéro de dépôt: 00974626.4
(22) Date de dépôt: 02.11.2000
(51) Int. Cl.: F16D 65/16

(54) **RAMPE A BILLES ET CYLINDRE DE FREINS COMPORTANT UNE TELLE RAMPE**
RAMPE MIT KUGELN SOWIE BREMSZYLINDER MIT EINER SOLCHEN RAMPE
BALL IN RAMP AND BRAKE CYLINDER COMPRISING SAME

(30) Priorité: 08.11.1999 FR 9914096
(43) Date de publication de la demande: 07.08.2002
(73) Titulaire: ROBERT BOSCH GMBH, 70442 Stuttgart (DE)
(72) Inventeur: BOISSEAU, Jean-Pierre, F-75014 PARIS (FR); MARTIN, Jean-Marc, Bâtiment C, 93700 DRANCY (FR)
(74) Mandataire: Hurwic, Aleksander Wiktor
(86) Numéro de dépôt international: PCT/FR2000/003046
(87) Numéro de publication internationale: WO 2001/034991

(56) Documents cités:
- FR-A- 2 289 374
- FR-A- 2 741 412
- US-A- 3 913 708
- US-A- 5 060 765

## Description

La présente invention se rapporte principalement à une rampe à billes ainsi qu'à un cylindre de frein pour véhicule automobile comportant une telle rampe.

Il est connu d'incorporer dans le cylindre d'un étrier d'un frein à disque à commande hydraulique une rampe à billes (ball in ramp ou BIR en terminologie anglosaxonne) transformant la rotation d'un levier entraîné par un câble de commande de frein de stationnement (appelé communément frein à main) en un mouvement de translation. Ce mouvement de translation est transmis au piston qui applique des organes de friction, typiquement des plaquettes, sur le disque assurant le ralentissement ou l'immobilisation du véhicule. Un exemple d'une telle rampe à billes est décrit dans le brevet européen publié sous le numéro EP-A-0 633 987.

Une telle rampe comporte de manière connue en soi trois billes interposées entre deux plateaux susceptibles, sur commande mécanique, de tourner l'un par rapport à l'autre. Typiquement, le plateau primaire solidarisé en rotation avec un levier de commande est monté à rotation par rapport à un étrier d'un cylindre d'un frein. Lors de la rotation du plateau primaire, le plateau secondaire entraîne en translation les pistons de frein. Ce mouvement de translation est obtenu en immobilisant en rotation le plateau secondaire par une vis radiale transversant la paroi du cylindre et venant se loger dans une gorge parallèle à l'axe, ménagée dans le plateau secondaire de la rampe. Le dispositif de l'art antérieur présente de nombreux inconvénients expliqués ci-après.

Tout d'abord, le taraudage de passage de la vis traverse la paroi d'un cylindre destiné à contenir un liquide de frein sous pression. Il en résulte des problèmes d'étanchéité. En outre, la vis est un dispositif encombrant et cher. Ainsi, on emploie une vis unique qui impose des contraintes élevées au plateau secondaire ainsi qu'au cylindre. En effet, la rotation du plateau primaire a tendance à assurer l'entraînement indésirable du plateau secondaire en rotation autour du point de contact entre la vis et ce plateau secondaire.

C'est par conséquent un but de la présente invention d'offrir un rampe à billes et un frein dépourvus des inconvénients des dispositifs de type connu.

C'est également un but de la présente invention d'offrir une rampe et un frein particulièrement fiables.

C'est aussi un but de la présente invention d'offrir une rampe à billes comportant des moyens d'immobilisation en rotation du plateau secondaire.

C'est également un but de la présente invention d'offrir une rampe à billes et un frein comportant une telle rampe présentant un prix de revient modéré.

Ces buts sont atteints par une rampe à billes d'après la revendication 1.

L'invention a également pour objet une telle rampe caractérisée en ce que lesdits moyens d'immobilisation angulaire du plateau capables de coopérer avec le logement de la rampe sont disposés de manière radialement externes par rapport à un desdits plateaux de la rampe.

L'invention a également pour objet une telle rampe caractérisée en ce que lesdits moyens d'immobilisation angulaire du plateau capables de coopérer avec le logement de la rampe sont disposés sur le plateau secondaire.

L'invention a également pour objet une telle rampe caractérisée en ce que lesdits moyens d'immobilisation angulaire du plateau capables de coopérer avec le logement de la rampe forment des éléments mâles.

L'invention a également pour objet une telle rampe caractérisée en ce que la pièce intermédiaire est réalisée en tôle d'acier d'épaisseur sensiblement constante et comporte des découpes permettant de déformer la tôle sans en modifier notablement l'épaisseur lors de la formation des éléments de protection des moyens d'immobilisation angulaire du plateau.

L'invention a également pour objet un cylindre de frein caractérisé en ce qu'il comporte au moins une rampe reliée à un levier de commande de frein de stationnement et un piston susceptible d'être entraîné en translation axiale par le coulissement d'un des deux plateaux lors de leurs rotations relatives.

L'invention a également pour objet un tel cylindre de frein caractérisé en ce qu'il comporte des gorges longitudinales capables de coopérer avec lesdits moyens d'immobilisation angulaire du plateau.

L'invention a également pour objet un cylindre de frein caractérisé en ce qu'il est réalisé en alliage léger, en ce que la paroi du cylindre (5) est munie de gorges axiales de réception des moyens d'immobilisation angulaire du plateau et en ce que le manchon comporte des moyens de protection pénétrant dans lesdites gorges axiales du cylindre en s'interposant entre lesdites gorges et lesdits moyens d'immobilisation angulaire du plateau monté en translation dans ledit manchon.

L'invention a également pour objet un tel cylindre de frein caractérisé en ce qu'il comporte un manchon formant cassette d'un poussoir à rattrapage automatique de jeu immobilisé en rotation et en translation à l'intérieur du cylindre et en ce qu'au moins un des plateaux est immobilisé angulairement par lesdits moyens d'immobilisation angulaire du plateau dans le manchon tout en étant monté en coulissement longitudinal dans ledit manchon.

L'invention sera mieux comprise au moyen de la description ci-après et des figures annexées données comme des exemples non limitatifs et sur lesquelles :
- la figure 1 est une coupe longitudinale d'un étrier de frein muni d'un dispositif de type connu ;
- la figure 2 est une vue en perspective de l'exemple préféré de réalisation d'une rampe à billes selon la présente invention ;
- la figure 3 est une vue en perspective d'une variante de réalisation d'une rampe à billes selon la présente invention ;
- la figure 4 est une vue en plan du plateau secondaire de la rampe de la figure 2 équipée des billes munies de l'exemple préféré de réalisation des moyens de protection ;
- la figure 5 est une vue longitudinale du dispositif de la figure 4 ;
- la figure 6 est une coupe longitudinale selon VI-VI du dispositif de la figure 4 ;
- la figure 7 est une coupe longitudinale d'un étrier muni d'un dispositif selon la présente invention.

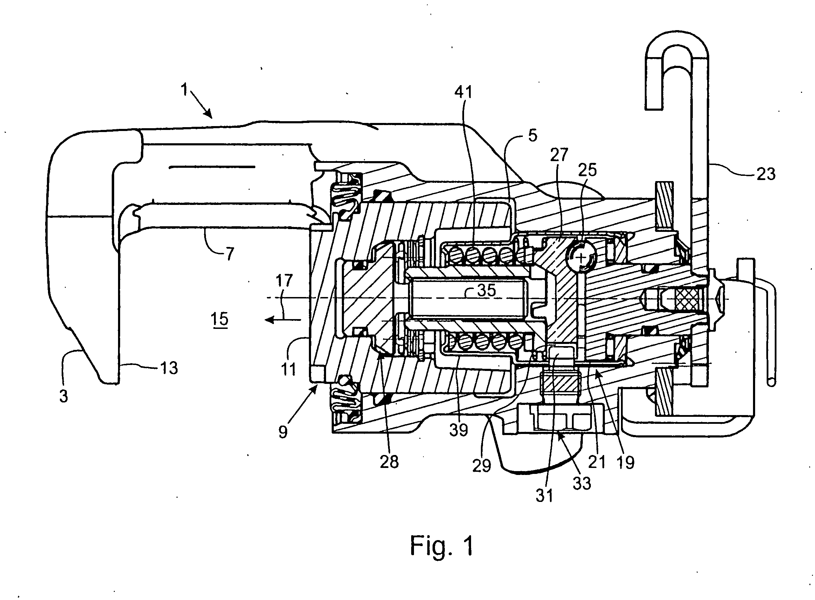

Sur la figure 1 à 7, on a utilisé les mêmes références pour désigner les mêmes éléments.

Sur la figure 1, on peut voir un étrier 1 comprenant, disposés en vis à vis, un nez d'étrier 3 et l'ouverture d'un cylindre 5 solidarisés par une voûte d'étrier 7. Le cylindre 5 reçoit un piston 9 dont la face avant 11 reçoit un premier organe de friction typiquement sous la forme d'une plaquette de frein (non représenté) disposé en vis à vis d'un second organe de friction typiquement également sous la forme d'une plaquette de frein (non représenté) porté par une face 13 interne du nez d'étrier 3. Les faces 11 et 13 définissent une cavité 15 de réception entre les plaquettes de frein, de la zone radialement externe d'un disque d'un frein à disques. Des moyens hydrauliques connus en soi assurent, sur commande, lorsque le conducteur appuie sur la pédale de freins, l'avancement du piston 9 selon une flèche 17 avec application des organes de friction sur les deux faces principales de la zone radialement externe du disque. De manière classique, le dispositif de la figure 1 comporte derrière le cylindre 9 un dispositif de commande de freins de stationnement comportant une rampe à billes 19 comprenant un plateau primaire 21, lié en rotation avec un levier 23 susceptible d'être entraîné en rotation par le câble de frein de parking, trois billes 25 (une seule étant visible sur la figure 1) et un plateau secondaire 27. La face avant du plateau secondaire 27, opposée à la face recevant les billes 25 est en contact avec un poussoir axial 28 prenant appui sur la face arrière du piston 9. Le plateau secondaire 27 comporte une rainure longitudinale 29 de réception d'une extrêmité 31 d'une vis 33 assurant l'immobilisation angulaire du plateau 27 tout en le laissant coulisser axialement c'est à dire selon un axe 35 du cylindre 5, du piston 9 ainsi que de la rampe à billes 19. Le poussoir 28 transmet le mouvement axial selon la flèche 17 du plateau secondaire 27 au piston 9 assurant le serrage des plaquettes sur le disque (non représentés). Un manchon 39 assure l'assemblage de la rampe à billes 19 du poussoir 28 et d'un ressort de précontrainte et de rappel 41.

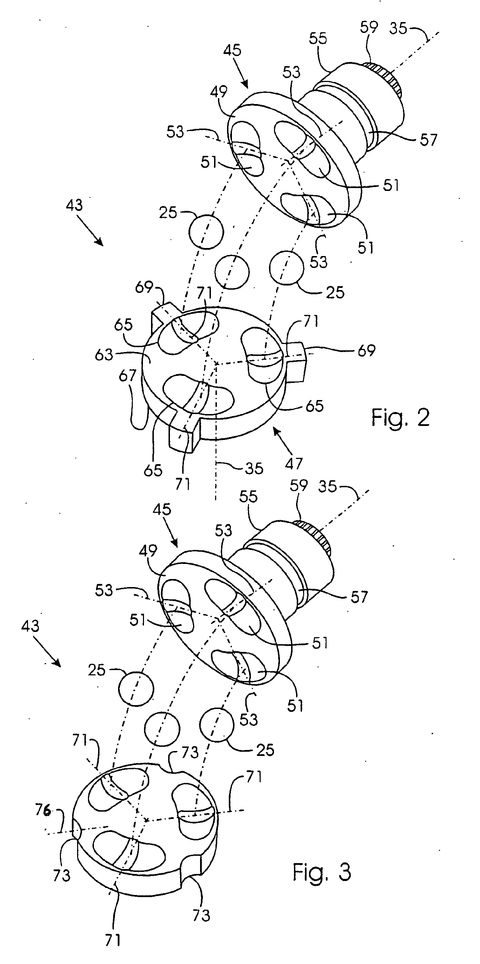

Sur la figure 2, on peut voir l'exemple préféré de réalisation d'une rampe à billes 43 selon la présente invention comportant un plateau primaire 45 analogue au plateau primaire 21 de la rampe à billes 19 de type connu, au moins une bille 25 et un plateau secondaire 47.

Une face principale 49 du plateau primaire 45 est munie d'au moins une, par exemple de trois cavités 51 de profondeur variable assurant le guidage radial des billes 25. Avantageusement, toutes les cavités 51 présentent le même profil, c'est à dire la même variation angulaire de la profondeur. Avantageusement, les cavités 51 ont un profil angulairement symétrique par rapport à une ligne médiane 53 correspondant à la profondeur maximale. Ainsi, un même plateau peut être utilisé indifféremment dans les rampes devant tourner un sens direct ou dans le sens inverse autour de l'axe 35. Avantageusement, les cavités 51 présentent une discontinuité de pente dont un exemple est décrit dans le brevet EP-A-0633 987 précité. Avantageusement, le plateau primaire 45 est prolongé par un axe 55 comportant une gorge 57 de réception d'un joint d'étanchéité, avantageusement d'un joint torique, terminé par des moyens d'accouplement avec le levier 23 tel qu'un molletage 59 de l'extrêmité de l'axe 55 et un taraudage de réception d'une vis d'assemblage.

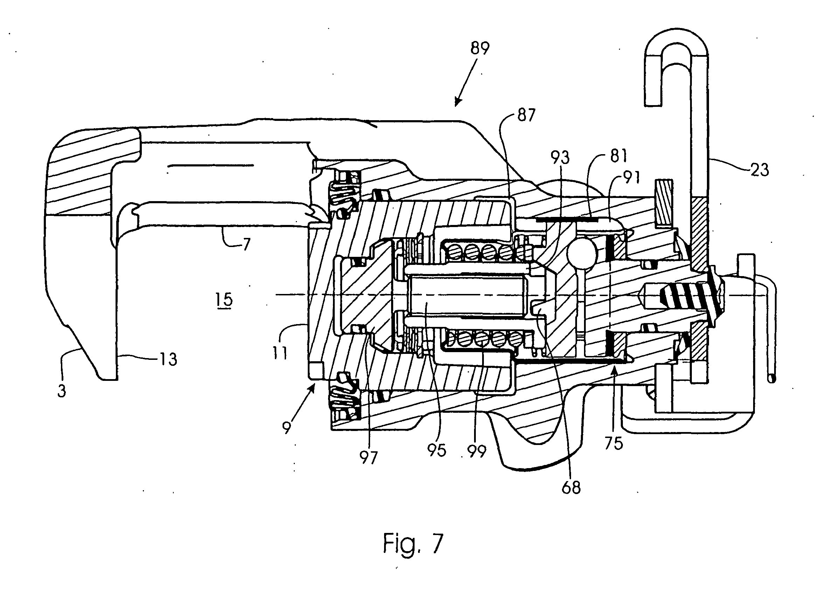

Le plateau secondaire 47 comporte une face principale 63 disposée en vis à vis de la face 49 du plateau primaire 45. La face 63 du plateau secondaire 47 comporte des cavités 65 de guidage des billes 25. L'ensemble des cavités 51 de la face principale 49 du plateau primaire 45 et des cavités 65 de la face principale 63 du plateau secondaire 47 assure le guidage radial et angulaire des billes 25. Dans l'exemple de réalisation illustré les cavités 65 du plateau secondaire 47 ont un profil analogue à celui des cavités 51 du plateau primaire 45. La face 67 du plateau secondaire 47, opposée à la face principale 63 est munie d'éléments 68 (visibles sur la figure 7), avantageusement de protubérance de transmission de force au poussoir 28.

Au moins un des plateaux primaires 45 et secondaires 47 comporte des moyens capables de coopérer directement ou indirectement avec le logement ou le conditionnement de la rampe à billes selon la présente invention, de manière à contrôler la position angulaire d'au moins un des deux plateaux 45, 47. Dans l'exemple préféré de réalisation illustré, le contrôle de la position angulaire consiste en une immobilisation angulaire du plateau secondaire 47. Cette immobilisation est assurée par des moyens disposés sur le plateau secondaire capable de coopérer directement ou indirectement avec des moyens complémentaires solidarisés avec le logement de la rampe, notamment avec le cylindre d'un étrier de freins. Le plateau secondaire 47 de la figure 2 est muni d'au moins un ergot 69 ayant avantageusement un profil rectangulaire ou sensiblement rectangulaire. Avantageusement, le nombre d'ergots 69 est égal au nombre de cavités 65. Par exemple, le plateau secondaire 47 de la figure 2 est muni de trois ergots avantageusement chacun disposé dans le prolongement radialement externe de l'axe 71 d'une des cavités 65. Les ergots 69 sont susceptibles de coulisser dans des gorges longitudinales de profil complémentaire ménagées sur la face interne de la paroi du logement de réception de la rampe 43, typiquement d'un cylindre d'étrier de frein, La mise en oeuvre d'une pluralité d'ergots 69 permet, d'une part de répartir les efforts, et d'autre part améliore la translation du plateau secondaire 47 dans son logement dans la mesure où l'on évite qu'un ergot 69 unique constitue le point de pivotement du plateau 47.

Avantageusement, les ergots 69 ont la même épaisseur ou sensiblement la même épaisseur que le plateau secondaire 47, leurs faces antérieures étant disposées dans le même plan que la face principale 63 du plateau secondaire 47, alors que leurs faces arrières sont disposées dans le même plan que la face arrière 67 du plateau 47.

Il est bien entendu que la présente invention n'est pas limitée à la mis en oeuvre d'ergots 69 mais s'étend également à d'autres modes de réalisation des moyens d'immobilisation angularisé du plateau secondaire 47. Un exemple mettant en oeuvre des gorges longitudinales 73 est illustré sur la figure 3. Avantageusement, la ou les gorges 73 sont disposées entre les cavités 65. Par exemple une ligne médiane 76 d'une gorge 73 est disposée sur la bissectrice de deux lignes médianes 71 de deux cavités 65 consécutives.

Le plateau secondaire 47 est avantageusement réalisé en un matériau dur tel que des matériaux frités ou, avantageusement, de l'acier par exemple de type 16 NC6 à 20 NC6 avec avantageusement un traitement de surface pour augmenter par exemple la dureté. Les étriers de frein, et, notamment le cylindre 5 du piston 9 est couramment réalisé en matériaux tendres tels que des alliages légers notamment des alliages d'aluminium par exemple AS7G06. Ainsi, il peut s'avérer avantageux d'interposer une pièce ou un revêtement intermédiaire entre les moyens de blocage en rotation du plateau secondaire 47, notamment les ergots 69 ou les gorges 73 et les moyens complémentaires du cylindre 5.

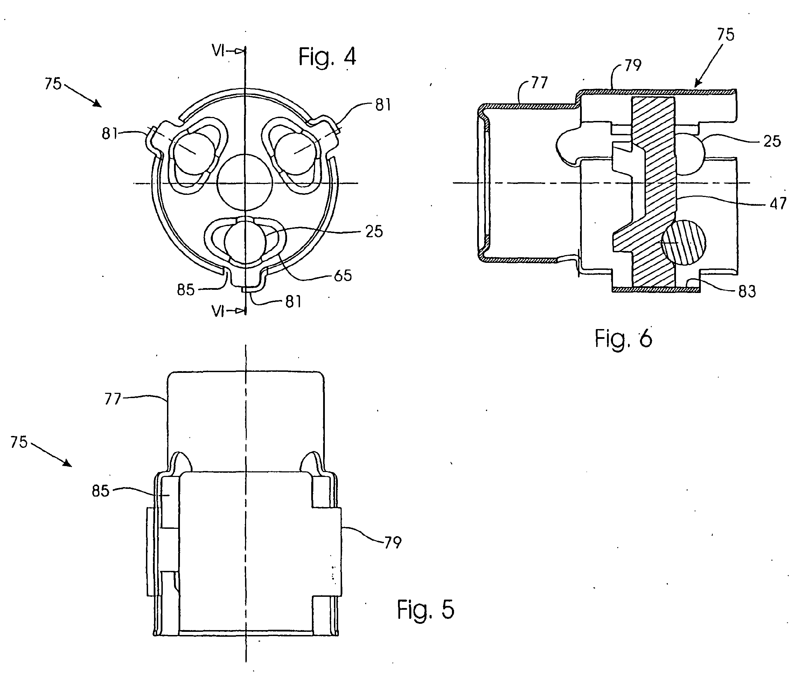

Sur les figures 4 à 6 on peut voir l'exemple préféré de réalisation d'un manchon 75 réalisé en un matériau résistant, notamment en tôle d'acier, interposé entre les ergots 69 du plateau secondaire 47 et des gorges de réception ménagées dans la paroi du cylindre 5. Avantageusement, le manchon 75 forme une cage d'un dispositif de rattrapage de jeu automatique du poussoir du piston 9 tel qu'illustré sur la figure 7. Un dispositif de rattrapage de jeu analogue dans lequel un pion porté par une vis assure l'immobilisation en rotation du plateau secondaire de la rampe à billes est décrit dans le brevet français 95 13630 publié sous le numéro FR-A-2 741 412.

Le manchon 75 des figures 4 à 7 comporte, comme le manchon de type connu une première zone 77 ayant un premier diamètre ainsi qu'une deuxième zone 79 ayant un deuxième diamètre plus grand que ledit premier diamètre. La rampe à billes selon la présente invention est logée dans la zone 79 ayant le plus grand diamètre. Ainsi, cette zone comporte des éléments de protection 81 ménageant des réserves 83 de réception des ergots 69. Avantageusement, les manchons 75 sont formés par déformation d'une tôle métallique avantageusement en acier. Ainsi, il est avantageux d'effectuer préalablement à la déformation des découpes 85 permettant de déformer la tôle des parois du manchon 75 sans en modifier notablement l'épaisseur. Il en résulte que les éléments de protection 81 ne recouvrent que partiellement les ergots 69.

Comme on peut le voir sur la figure 7, le cylindre 87 de l'étrier de frein 89 selon la présente invention comporte une zone 91 disposée à l'opposée de la zone de réception du piston 9 par rapport à l'ouverture du cylindre. La zone 91 reçoit la zone 79 de plus grand diamètre du manchon 75 et est pourvue des gorges axiales de réception des éléments de protection 81 assurant ainsi l'immobilisation en rotation du plateau secondaire 47 de la rampe à billes selon la présente invention.

Il est bien entendu que la présente invention n'est nullement limitée à la mise en oeuvre de plateau 47 muni d'ergots 69 et que, dans le cas d'une mise en oeuvre d'un plateau secondaire muni d'autres moyens d'immobilisation en rotation comme par exemple des gorges 73, la zone correspondante 91 du cylindre 89 de l'étrier selon la présente invention comporte des moyens adaptés. Dans le cas d'un plateau secondaire 47 muni de gorges longitudinales 73, la zone 91 du cylindre 89 est par exemple munie de nervures de guidage des gorges 73.

Avantageusement, le dispositif de freinage selon la présente invention comporte un poussoir 28 du piston 9 à rattrapage de jeu résultant de l'usure des organes de friction analogue au poussoir 28 de la figure 1. Le poussoir 28 comporte par exemple un écrou allongé 93 et, une vis 95 engagée dans l'écrou allongé 93. Une tête 97 de la vis 95 présente un épaulement conique susceptible de s'appuyer contre une surface conique interne du piston 9. L'écrou allongé 93 et la vis 95 sont sollicités par une force élastique d'un ressort de rappel 99 dans un sens propre à les dévisser l'un de l'autre et à augmenter relativement la longueur du poussoir 28 qu'ils constituent ensemble, pour permettre, lors de l'accroissement de la pression du liquide de frein, une rotation de la vis 95 jusqu'à la position où l'épaulement conique de la tête 97 de la vis 95 se trouve bloqué en rotation sur la surface interne du piston 9. Avantageusement, l'écrou est immobilisé en rotation par le plateau secondaire 47 de la rampe à billes 43, lui-même étant immobilisé angulairement dans le cylindre 5. Le manchon 75 disposé dans le cylindre 5 forme une cage recevant le ressort de précontrainte 99, l'écrou allongé 93 et la rampe à billes 43.

Ce manchon 75 est immobilisé dans le cylindre 5 aussi bien en rotation qu'en translation. Il en résulte que ce manchon ne provoque pas d'usure du cylindre qu'il protège contre l'action abrasive du plateau secondaire 47 immobilisé angulairement, mais susceptible, sur commande mécanique, de se déplacer en translation selon l'axe 35. Dans la mesure où le manchon 75 est réalisé en un matériau dur, son usure par le plateau secondaire 47 est négligeable.

Toutefois, il est bien entendu que la présente invention n'est pas limitée à la mise en oeuvre d'un manchon de protection mais s'étend également aux cylindres en matériau dur ou en matériau tendre, notamment en alliage d'aluminium non protégé, aux cylindres en matériau tendre comportant un traitement global ou local de la matière comme par exemple un dépôt électrolytique de matériau dur notamment au niveau des gorges de réception des ergots ou des nervures pénétrant dans les gorges 73, ainsi qu'au cylindre comportant des pièces de protection spécifiques non associées aux manchons formant une cassette de réception du poussoir 28.

La présente invention s'applique notamment aux industries mécaniques.

La présente invention s'applique principalement à l'industrie automobile.

## Revendications

1. Rampe à billes comportant un premier plateau primaire (45) comprenant des moyens (55) d'entraînement en rotation, au moins une bille (25) et un deuxième plateau, secondaire, (47), le plateau primaire (45) et/ou le plateau secondaire (47) comportant au moins une cavité de guidage (51, 65) creusée dans au moins un de ces plateaux (45, 47) ayant une profondeur variable angulairement, assurant le guidage radial d'une bille (25) de manière à faire varier la distance relative entre les deux plateaux (45, 47) prenant appui sur la bille (25) lors de leur rotation relative **caractérisée en ce que** un des deux plateaux (45, 47) comporte des moyens (69, 73) d'immobilisation angulaire du plateau (45, 47) capables de coopérer directement ou indirectement avec le logement (89, 91) de réception de la rampe et **en ce qu'**elle comporte en outre une pièce intermédiaire radialement externe (75) susceptible d'être interposée entre lesdits moyens (69, 73) d'immobilisation angulaire du plateau (45, 47) et des moyens complémentaires (5) solidarisés avec le logement (89,91) de réception de la rampe et permettant le coulissement longitudinal d'un des deux plateaux (45, 47) de la rampe à l'intérieur de la pièce intermédiaire (75) et **en ce que** la pièce intermédiaire (75) est un manchon formant cassette d'un poussoir à rattrapage de jeu automatique.

2. Rampe selon la revendication 1 **caractérisée en ce que** lesdits moyens d'immobilisation angulaire du plateau (45, 47) capables de coopérer avec le logement (89,91) de réception de la rampe sont disposés de manière radialement externes par rapport à un desdits plateaux (45, 47) de la rampe.

3. Rampe selon la revendication 1 ou 2 **caractérisée en ce que** lesdits moyens d'immobilisation angulaire du plateau (45, 47) capables de coopérer avec le logement de la rampe sont disposés sur le plateau secondaire (47).

4. Rampe selon l'une quelconque des revendications précédentes **caractérisée en ce que** lesdits moyens (69) d'immobilisation angulaire du plateau (45, 47) capables de coopérer avec le logement de la rampe forment des éléments mâles (69).

5. Rampe selon l'une quelconque des revendications précédentes **caractérisée en ce que** le plateau (45, 47) est muni d'ergots formant lesdits moyens (69, 73) d'immobilisation angulaire du plateau et **en ce que** le manchon formant cassette du poussoir de rattrapage de jeu automatique (75) est muni d'éléments de protection (81) recouvrant au moins partiellement lesdits ergots.

6. Rampe selon la revendication 4 ou 5 **caractérisée en ce que** la pièce intermédiaire est réalisée en tôle d'acier d'épaisseur sensiblement constante et comporte des découpes (85) permettant de déformer la tôle sans en modifier notablement l'épaisseur lors de la formation des éléments (81) de protection des moyens (69, 73) d'immobilisation angulaire du plateau (45, 47).

7. Cylindre de frein **caractérisé en ce qu'**il comporte au moins une rampe selon l'une quelconque des revendications précédentes reliée à un levier (23) de commande de frein de stationnement et un piston (9) susceptible d'être entraîné en translation axiale par le coulissement d'un des deux plateaux (45, 47) lors de leurs rotations relatives.

8. Cylindre de frein selon la revendication 7 **caractérisé en ce qu'**il comporte des gorges longitudinales capables de coopérer avec lesdits moyens (69) d'immobilisation angulaire du plateau (45, 47).

9. Cylindre de frein selon la revendication 7 **caractérisé en ce qu'**il est réalisé en alliage léger, **en ce que** la paroi du cylindre (5) est munie de gorges axiales de réception des moyens (69,73) d'immobilisation angulaire de plateau et **en ce que** le manchon (95) comporte des moyens (81) de protection pénétrant dans lesdites gorges axiales du cylindre (5) en s'interposant entre lesdites gorges et lesdits moyens (69, 73) d'immobilisation angulaire du plateau monté en translation dans ledit manchon.

10. Cylindre de frein selon la revendication 8 ou 9 **caractérisé en ce que** le manchon (75) forme une cassette d'un poussoir à rattrapage automatique de jeu, ledit manchon étant immobilisé en rotation et en translation à l'intérieur du cylindre et **en ce qu'**un des plateaux (45, 47) est immobilisé angulairement par lesdits moyens (69) d'immobilisation angulaire du plateau (45, 47) dans le manchon (75) tout en étant monté en coulissement longitudinal dans ledit manchon (75).

## Claims

1. Ball-in ramp comprising a first, primary plate (45) including rotation driving means (55), at least one ball (25) and a second, secondary plate (47), the primary plate (45) and/or the secondary plate (47) including at least one guiding cavity (51, 65), made in at least one of the plates (45, 47) and having an angularly variable depth, for the radial guidance of a ball (25) so as to change the relative distance between the two plates (45, 47) resting on the ball (25) in the course of their relative rotational motions, **characterised in that** at least one of the two plates (45, 47) comprises means (69, 73) for the angular stopping of the plate (45, 47), which are capable of cooperating, either directly or indirectly, with the housing (89, 91) accommodating the ramp, and **in that** it further includes a radially outer intermediate part (75), capable of being placed between said angular-stopping means (69, 73) for the plate (45, 47), and complementary means (5) interlocking with said housing (89, 91) accommodating the ramp and allowing a longitudinal sliding motion of one of the two ramp plates (45, 47) inside the intermediate part (75, and **in that** the intermediate part (75) is a cartridge-forming sleeve for an automatic play take-up push-rod.

2. Ramp according to claim 1, **characterised in that** said angular-stopping means for the plate (45, 47), capable of cooperating with the housing (89, 91) accommodating the ramp, are arranged in a radially outer manner in relation to one of said ramp plates (45, 47).

3. Ramp according to claim 1 or 2, **characterised in that** said angular-stopping means for the plate (45, 47), capable of cooperating with the ramp housing, are arranged on the secondary plate (47).

4. Ramp according to any one of the preceding claims, **characterised in that** said angular-stopping means (69) for the plate (45, 47), capable of cooperating with the ramp housing, form male elements (69).

5. Ramp according to any one of the preceding claims,**characterised in that** the plate (45, 47) is equipped with pins forming said angular-stopping means (69, 73) for the plate, and **in that** the cartridge-forming sleeve of the automatic play take-up push-rod (75) is equipped with protective elements (81) at least partially covering pins.

6. Ramp according to claim 4 or 5, **characterised in that** the intermediate part consists of a steel sheet, the thickness of which is substantially uniform and in which cuts (85) are made, thus allowing the sheet to be deformed without a noticeable alteration of its thickness, when the protective elements (81) of the angular-stopping means (69, 73) for the plate (45, 47) are formed.

7. Brake cylinder, **characterised in that** it comprises at least one ramp according to any one of the preceding claims, which is connected to the actuating lever (23) of a parking brake, and a piston (9) capable of an axial translation motion through the sliding of one of the two plates (45, 47) on their relative rotational motions.

8. Brake cylinder according to claim 7, **characterised in that** it comprises longitudinal slots, capable of cooperating with said angular-stopping means (69) for the plate (45, 47).

9. Brake cylinder according to claims 4, 5 or 6, **characterised in that** it is made of light alloy, **in that** the wall of the cylinder (5) has axial slots for accomodating the angular-stopping means (69, 73) for the plate, and **in that** the sleeve (75) comprises protective means (81) entering said axial slots in the cylinder (5) and being inserted between said slots and said angular-stopping means (69, 73) for the plate mounted in translation in said sleeve.

10. Brake cylinder according to claim 8 or 9, **characterised in that** it includes a cartridge-forming sleeve (75) for an automatic play take-up push-rod, which can be locked against rotation and translation inside the cylinder, and **in that** at least one of the plates (45, 47) is angularly stopped in the sleeve (75) by said angular-stopping means (69) for the plate (45, 47), while being capable of a longitudinal sliding motion in said sleeve (75).

## Patentansprüche

1. Kugelrampe mit einer ersten, primären Platte (45), die Mittel (55) zur Erzeugung einer Drehung aufweist, mit mindestens einer Kugel (25) und mit einer zweiten, sekundären Platte (47), wobei die primäre Platte (45) und/oder die sekundäre Platte (47) mindestens einen Führungshohlraum (51, 65) aufweist, der in mindestens einer dieser Platten (45, 47) ausgehöhlt ist, eine Tiefe besitzt, die hinsichtlich des Winkels variabel ist, und der die radiale Führung einer Kugel (25) so gewährleistet, dass der relative Abstand zwischen den beiden an der Kugel (25) anliegenden Platten (45, 47) bei ihrer Drehung zueinander variiert wird, **dadurch gekennzeichnet, dass** eine der beiden Platten (45, 47) Mittel (69, 73) zur Winkelblockierung der Platte (45, 47) aufweist, die direkt oder indirekt mit dem Sitz (89, 91) zur Aufnahme der Rampe zusammenwirken können, und dass sie ferner ein radial äußeres Zwischenteil (75) aufweist, das zwischen den Mitteln (69, 73) zur Winkelblockierung der Platte (45, 47) und komplementären Mitteln (5) angeordnet sein kann, welche fest mit dem Sitz (89, 91) zur Aufnahme der Rampe verbunden sind und das Längsgleiten einer der beiden Platten (45, 47) der Rampe im Zwischenteil (75) ermöglichen, und dass das Zwischenteil (75) eine Hülse ist, die ein Gehäuse für einen Stößel mit automatischer Spielbeseitigung bildet.

2. Rampe nach Anspruch 1, **dadurch gekennzeichnet, dass** die Mittel zur Winkelblockierung der Platte (45, 47), die mit dem Sitz (89, 91) zur Aufnahme der Rampe zusammenwirken können, bezüglich einer der Platten (45, 47) der Rampe radial außerhalb angeordnet sind.

3. Rampe nach Anspruch 1 oder 2, **dadurch gekennzeichnet, dass** die Mittel zur Winkelblockierung der Platte (45, 47), die mit dem Sitz der Rampe zusammenwirken können, an der sekundären Platte (47) angeordnet sind.

4. Rampe nach einem der vorhergehenden Ansprüche, **dadurch gekennzeichnet, dass** die Mittel (69) zur Winkelblockierung der Platte (45, 47), die mit dem Sitz der Rampe zusammenwirken können, Steckelemente (69) bilden.

5. Rampe nach einem der vorhergehenden Ansprüche, **dadurch gekennzeichnet, dass** die Platte (45, 47) mit Nasen versehen ist, die die Mittel (69, 73) zur Winkelblockierung der Platte bilden, und dass die Hülse (75), die ein Gehäuse für den Stößel zur automatischen Spielbeseitigung bildet, mit Schutzelementen (81) versehen ist, die die Nasen zumindest teilweise bedecken.

6. Rampe nach Anspruch 4 oder 5, **dadurch gekennzeichnet, dass** das Zwischenteil aus Stahlblech mit einer im Wesentlichen konstanten Dicke hergestellt ist und Ausschnitte (85) aufweist, die die Verformung des Blechs ohne merkliche Veränderung der Dicke bei der Herstellung der Elemente (81) zum Schutz der Mittel (69, 73) zur Winkelblockierung der Platte (45, 47) ermöglichen.

7. Bremszylinder, **dadurch gekennzeichnet, dass** er mindestens eine Rampe nach einem der vorhergehenden Ansprüche aufweist, die mit einem Handbrems-Steuerhebel (23) verbunden ist, und einen Kolben (9), der durch das Gleiten einer der beiden Platten (45, 47) bei ihrer Drehung zueinander in eine axiale Translationsbewegung angetrieben werden kann.

8. Bremszylinder nach Anspruch 7, **dadurch gekennzeichnet, dass** er Längsnuten aufweist, die mit den Mitteln (69) zur Winkelblockierung der Platte (45, 47) zusammenwirken können.

9. Bremszylinder nach Anspruch 7, **dadurch gekennzeichnet, dass** er aus einer Leichtmetall-Legierung besteht, dass die Wand des Zylinders (5) mit axialen Nuten zur Aufnahme der Mittel (69, 73) zur Winkelblockierung der Platte versehen ist und dass die Hülse (75) Schutzmittel (81) aufweist, die in die axialen Nuten des Zylinders (5) dringen und sich dabei zwischen die Nuten und die Mittel (69, 73) zur Winkelblockierung der Platte einfügen, welche translatorisch in der Hülse angebracht ist.

10. Bremszylinder nach Anspruch 8 oder 9, **dadurch gekennzeichnet, dass** die Hülse (75) ein Gehäuse für einen Stößel mit automatischer Spielbeseitigung bildet, wobei die Dreh- und Translationsbewegung der Hülse im Zylinder blockiert ist, und dass eine der Platten (45, 47) durch die Mittel (69) zur Winkelblockierung der Platte (45, 47) in der Hülse (75) winkelmäßig blockiert ist und gleichzeitig in der Hülse (75) so angebracht ist, dass sie der Länge nach gleiten kann.
